# EUROPEAN PATENT APPLICATION

(11) **EP 4 442 617 A1**
(43) Date of publication of application: **09.10.2024**
(21) Application number: 23166613.2
(22) Date of filing: 04.04.2023
(51) Int. Cl.: B65G 15/64, B65G 43/02, B65G 43/04

(54) **METHOD AND SYSTEM FOR BELT SWAY BASED ADJUSTMENT OF CONVEYOR BELT**

(71) Applicant: Siemens Aktiengesellschaft, 80333 München (DE)
(72) Inventor: MANDAVA, Bala Sai Krishna, 521136 Movva (IN); TAURO, Ranish Lloyd, 574106 Udupi, Karnataka (IN)
(74) Representative: Patentanwaltskanzlei WILHELM & BECK

(57) **Abstract**

The present invention provides a method and a system for adjusting a conveyor belt based on a belt sway of the conveyor belt. The system comprises an image capture device, one or more actuators, and one or more processing units. The one or more actuators are configured to adjust a shape of the conveyor belt. The one or more processing units is configured to determine a belt sway measurement of the conveyor belt based on an analysis of the at least one image. The one or more processing units is further configured to generate a control signal based on the determined belt sway measurement. The one or more processing units is further configured to transmit the control signal to the one or more actuators to adjust a shape of the conveyor belt based on the determined belt sway of the conveyor belt.

## Description

The present invention relates to a field of conveyor belt management, and more particularly relates to a method and system for adjusting a conveyor belt based on a belt sway of the conveyor belt.

A technical installation such as an industrial plant comprises a material transportation system such as a conveyor belt system. One of the main challenges in conveyor belt systems is belt sway, which refers to a deviation of the conveyor belt from an intended path.

An occurrence of the belt sway in the conveyor belt causes several problems in the industrial plant. For example, the belt sway causes material spillage to a factory floor of the industrial plant. Thus, the belt sway causes waste and reduced efficiency. Furthermore, the belt sway may cause excessive stress on the conveyor belt, which can result in damage and reduced belt life. The belt sway further causes excessive wear and tear of idlers, motors, and actuators used to control the conveyor belt. Furthermore, the belt sway causes reduced production efficiency and slower material flow, which can negatively impact overall production performance. The occurrence of the belt sway may also create safety hazards, such as a risk of the material spilling onto workers or equipment, or a risk of workers being caught in moving parts of the conveyor belt.

Thus, the belt sway causes several problems, including material spillage, increased wear and tear of the belt, and reduced efficiency of the industrial plant. To minimize belt sway, various methods have been proposed, including the use of guide rollers, tensioning systems, and active control systems. However, these methods are often complex, costly, and require frequent maintenance. There is a need for a simpler and more cost-effective method for minimizing belt sway in conveyor belt systems.

In light of the above, there exists a need for an efficient and cost-effective method and system for adjusting a conveyor belt based on a belt sway of the conveyor belt. Therefore, it is an object of the present invention to provide a method and system for adjusting a conveyor belt based on a belt sway of the conveyor belt.

The object of the invention is achieved by a method and system for adjusting a conveyor belt based on a belt sway of the conveyor belt. The conveyor belt is used to transport material in a technical installation. Examples of the conveyor belts include, but is not limited to Flat Belt conveyor belts, modular Belt conveyors, cleated Belt conveyors, spiral conveyor belts and chain conveyor belts.

In a preferred embodiment, a system for adjusting a conveyor belt based on a belt sway of the conveyor belt comprises an image capture device, one or more actuators, one or more processing units, and a proportional integral derievative (PID) controllers.

In a preferred embodiment an image capture device is configured to capture at least one image of a conveyor belt. Examples of the image capture device comprises but is not limited to industrial cameras, line-scan cameras, infrared cameras, time-of-flight cameras, stereo cameras, mobile phone cameras and machine vision integrated cameras.

In the preferred embodimend, the one or more actuators are communicatively coupled with the conveyor belt. Furthermore, the one or more actuators are configured to adjust a shape of the conveyor belt. The one or more actuators are configured to adjust the shape of the conveyor belt by exerting pressure on one or more components associated with the conveyor belt. In one example, the one or more actuators comprise pneumatic actuators, hydraulic actuators, electric actuators, and mechanical actuators. The one or more actuators are configured to exert pressure on one or more idlers associated with the conveyor belt to adjust a tension and shape of the conveyor belt. Examples of the one or more idlers of the conveyor belt includes, but is not limited to troughing idlers, impact idlers, return idlers, guide idlers, self aligning idlers, and tension idlers. In one example, the one or more actuators are configured to activate one or more tension idlers of the conveyor belt to increase conveyor belt and thereby adjust the shape of the conveyor belt.

In the preferred embodiment, the one or more processing units comprises at least one of a programmable logic controllers, a microcontroller, a field programmable gate array, an integrated circuit chip, a system on a chip device, a computer, or a smart phone. The one or more processing units is further configured to receive the at least one image from the image capture device. The one or more processing units is further configured to apply an edge detection algorithm on the at least one image. Examples of the edge detection algorithm includes, but is not limited to a sobel operator algorithm, a canny edge detector algorithm, a robert cross operator algorithm, a prewitt operator algorithm, a zero crossing algorithm, and a kirsch compass mask algorithm. The edge detection algorithm is configured to identify the conveyor belt in the at least one image and to further identify a plurality of contour lines of the conveyor belt in the at least one image. The edge detection algorithm is further configured to generate an edge map based on the detected plurality of contour lines. The edge map is a binary image comprising the plurality of contour lines of the conveyor belt.

In the preferred embodiment, the one or more processing units are further configured to extract the plurality of contour lines of the conveyor belt from the at least one image by application of the edge detection algorithm on the at least one image of the conveyor belt. The one or more processing units are further configured to apply a morphological operation on the edge map to determine an image skeleton, which is a thinned representation of a central line of the conveyor belt. Examples of the morphological operation incldues an erosion operaion, a dilation operation, and a subtraction operation. The one or more processing unit is further configured to determine a plurality of skeleton pixels from the determined image skeleton by application of one or more image filters such as a low pass filter and a high pass filter. The one or more processing unit is further configured to connect the plurality of skeleton pixels to determine the central line for the conveyor belt. In other words, the one or more processing unit is further configured to determine a center line of the conveyor belt based on an analysis of the plurality of contour lines of the at least one image.

In the preferred embodiment, the one or more processing unit is configured to compare the determined center line of the conveyor belt with one or more reference points in the at least one image. The one or more reference points are indicative of one or more reference pixels in the at least one image. In one example, the one or more processing unit is configured to determine a euclidean distance between at least one pixel in the determined center line and the one or more reference pixels to compare the determined center line of the conveyor belt with one or more reference points. In one example, the determined euclidean distance is indicative of a a displacement of the center line of the conveyor belt in comparison with the one or more reference points in the at least one image.

In the prefered embodiment, the one or more processing unit is further configured to determine the belt sway measurement of the conveyor belt based on the determined euclidean distance. Advantageously, the belt sway measurement of the conveyor belt is automatically determined by the one or more processing units without manual intervention. Furthermore, use of the edge detection algorithm to measure the belt sway measurement has added afvantages such as increased accuracy, high speed data collection, consistency, reduced cost, and early detection.

In the preferred embodiment, the one or more processing unit is further configured to receive a plurality of PID tuning configurations from a database. The plurality of PID tuning configurations comprises a proportional gain configuration, an integral gain configuration and a derivative gain configuration for the PID controller. In one example, the plurality of PID tuning configurations are received from a user. In another example, the plurality of PID tuning configurations are generated by application of one or more tuning methods like Ziegler-Nichols tuning method or the Tyreus-Luyben tuning method on one or more data models of the conveyor belt. In one example, the one or more data models are mathematical relationships between a belt sway of the conveyor belt and a shape of the conveyor belt. The plurality of PID tuning configurations are indicative of a proportional, integral and derievative relationship between a belt sway of the conveyor belt and one or more control signals which are to be applied to the one or more actuators readjust the conveyor belt to counteract the belt sway on the conveyor belt.

In the preferred embodiment, the one or more processing units are further configured to tune the PID controller based on the plurality of PID tuning configurations. The one or more processing units is further configured to transmit the determined belt sway measurement to the PID controller to generate the control signal based on the determined belt sway measurement. In other words, the one or more processing units is configured to control the PID controller to generate the control signal based on the determined belt sway measurement. The one or more processing units is further configured to transmit the control signal to the one or more actuators of the conveyor belt to adjust the shape of the conveyor belt based on the determined belt sway of the conveyor belt. In one example, the one or more actuators are communicatively coupled to one or more drive pulleys of the conveyor belt. In such a case, the one or more actuators are configured to cause the drive pulleys to increase a tension of the conveyor belt and thereby adjust the shape of the conveyor belt.

Advantageously, the PID controller is used to continuously monitor and readjust the shape of the conveyor belt based on the belt sway measurement of the conveyor belt. Since the shape of the conveyor belt is adjusted automatically based on the determined belt sway, the conveyor belt is protected from any wear, tear and damage which occur due to belt sway in the conveyor belt.

In the preferred embodiment, the one or more processing units are further configured to receive from a database, a plurality of parameters associated with a plurality of conveyor belts. Examples of the plurality of parameters of each conveyor belt of the plurality of conveyor belts comprises at least an age, a belt sway measurement, a length, and a safe loading capacity of each conveyor belt of the plurality of conveyor belts. The one or more processing units is further configured to train a multi-linear regression model to predict a safe loading capacity of one or more conveyor belt based on other parameters of the one or more conveyor belts, such as a length and age of the one or more conveyor belts. The plurality of parameters associated with each conveyor belt of the plurality of conveyor belts further comprises a belt width and an idler troughing angle associated with each conveyor belt of the plurality of conveyor belts. The multi-linear regression is configured to analyze the plurality of parameters associated with a specific conveyor belt and to predict a safe loading capacity of the specific conveyor belt based on the analysis.

In the preferred embodiment, the one or more processing units is configured to receive from the database, a set of parameters associated with the conveyor belt. The set of parameters comprises a belt length, a belt age, a troughing angle of one or more idlers of the conveyor belt, and a width of the belt. The one or more processing units is further configured to analyze the belt sway measurement and the set of parameters by application of the multi-linear regression algorithm on the set of parameters and the belt sway measurement of the conveyor belt. The one or more processing units is further configured to determine a safe loading capacity of the conveyor belt based on the analysis of the conveyor belt.

In the preferred embodiment, the one or more processing units is further configured to receive, from the database, a density of a material transported by the conveyor belt. The one or more processing units is further configured to determine a quantity of the material which weighs lesser than or equal to the safe loading capacity of the conveyor belt. The one or more processing units is further configured to control a feeder to determine the determined quantity of the material on the conveyor belt. Thus advantageously, the one or more processing units automatically assign the material on the conveyor belt based on the belt sway measurement and the safe loading capacity of the conveyor belt. Since the safe loading capacity of the conveyor belt is continuosly monitored, a user is enabled to perform predictive maintenance on the conveyor belt.

In the preferred embodiment, the one or more processing units is further configured to determine a spillage of the material from at least one side of the conveyor belt to a factory floor based on an analysis of the at least one image. The one or more processing units is further configured to generate the control signal based on the determined spillage of the material. The one or more processing units is further configured to transmit the control signal to the one or more actuators to adjust the shape of the conveyor belt based on the determination of the spillage of the material from the conveyor belt. Advantageously, an occurrence of material spillage from the conveyor belt is automatically corrected based on the determination of the material spillage from the conveyor belt.

The object of the invention is achieved by a method for adjusting a conveyor belt based on a belt sway of the conveyor belt. The conveyor belt is used to transport material in a technical installation. Examples of the conveyor belts include, but is not limited to Flat Belt Conveyor belts, modular Belt Conveyors, cleated Belt Conveyors, spiral Conveyor belts and chain Conveyor belts.

In a preferred embodiment, the method comprises receiving, by the one or more processing units, at least one image of the conveyor belt. The at least one image is received from an image capture device. Examples of the image capture device comprises but is not limited to industrial cameras, line-scan cameras, infrared cameras, time-of-flight cameras, stereo cameras, mobile phone cameras and machine vision integrated cameras.

In the preferred embodiment, the method further comprises receiving, by the one or more processing units, the at least one image from the image capture device. The one or more processing units is further configured to apply an edge detection algorithm on the at least one image. Examples of the edge detection algorithm includes, but is not limited to a sobel operator algorithm, a canny edge detector algorithm, a robert cross operator algorithm, a prewitt operator algorithm, a zero crossing algorithm, and a kirsch compass mask algorithm. The edge detection algorithm is configured to identify the conveyor belt in the at least one image and to further identify a plurality of contour lines of the conveyor belt in the at least one image. The edge detection algorithm is further configured to generate an edge map based on the detected plurality of contour lines. The edge map is a binary image comprising the plurality of contour lines of the conveyor belt.

In the preferred embodiment, the method further comprises extracting, by the one or more processing units, by the one or more processing units, the plurality of contour lines of the conveyor belt from the at least one image by application of the edge detection algorithm on the at least one image of the conveyor belt. The one or more processing units are further configured to apply a morphological operation on the edge map to determine an image skeleton, which is a thinned representation of a central line of the conveyor belt. Examples of the morphological operation incldues an erosion operaion, a dilation operation, and a subtraction operation. The one or more processing unit is further configured to determine a plurality of skeleton pixels from the determined image skeleton by application of one or more image filters such as a low pass filter and a high pass filter. The one or more processing unit is further configured to connect the plurality of skeleton pixels to determine the central line for the conveyor belt. In other words, the one or more processing unit is further configured to determine a center line of the conveyor belt based on an analysis of the plurality of contour lines of the at least one image.

In the preferred embodiment, the method further comprises comparing, by the one or more processing units, the determined center line of the conveyor belt with one or more reference points in the at least one image. The one or more reference points are indicative of one or more reference pixels in the at least one image. In one example, the one or more processing unit is configured to determine a euclidean distance between at least one pixel in the determined center line and the one or more reference pixels to compare the determined center line of the conveyor belt with one or more reference points. In one example, the determined euclidean distance is indicative of a a displacement of the center line of the conveyor belt in comparison with the one or more reference points in the at least one image.

In the preferred embodiment, the method further comprises determining, by the one or more processing units, the belt sway measurement of the conveyor belt based on the determined euclidean distance. Advantageously, the belt sway measurement of the conveyor belt is automatically determined by the one or more processing units without manual intervention. Furthermore, use of the edge detection algorithm to measure the belt sway measurement has added afvantages such as increased accuracy, high speed data collection, consistency, reduced cost, and early detection.

In the preferred embodiment, the method further comprises receiving, by the one or more processing units, a plurality of PID tuning configurations from a database. The plurality of PID tuning configurations comprises a proportional gain configuration, an integral gain configuration and a derivative gain configuration for the PID controller. In one example, the plurality of PID tuning configurations are received from a user. In another example, the plurality of PID tuning configurations are generated by application of one or more tuning methods like Ziegler-Nichols tuning method or the Tyreus-Luyben tuning method on one or more data models of the conveyor belt. In one example, the one or more data models are mathematical relationships between a belt sway of the conveyor belt and a shape of the conveyor belt. The plurality of PID tuning configurations are indicative of a proportional, integral and derievative relationship between a belt sway of the conveyor belt and one or more control signals which are to be applied to the one or more actuators readjust the conveyor belt to counteract the belt sway on the conveyor belt.

In the preferred embodiment, the method further comprises tuning, by the one or more processing units, the PID controller based on the plurality of PID tuning configurations. The one or more processing units is further configured to transmit the determined belt sway measurement to the PID controller to generate the control signal based on the determined belt sway measurement. In other words, the one or more processing units is configured to control the PID controller to generate the control signal based on the determined belt sway measurement. The one or more processing units is further configured to transmit the control signal to the one or more actuators of the conveyor belt to adjust the shape of the conveyor belt based on the determined belt sway of the conveyor belt. In one example, the one or more actuators are communicatively coupled to one or more drive pulleys of the conveyor belt. In such a case, the one or more actuators are configured to cause the drive pulleys to increase a tension of the conveyor belt and thereby adjust the shape of the conveyor belt.

Advantageously, the PID controller is used to continuously monitor and readjust the shape of the conveyor belt based on the belt sway measurement of the conveyor belt. Since the shape of the conveyor belt is adjusted automatically based on the determined belt sway, the conveyor belt is protected from any wear, tear and damage which occur due to belt sway in the conveyor belt.

In the preferred embodiment, the method further comprises receiving, by the one or more processing units, from a database, a plurality of parameters associated with a plurality of conveyor belts. Examples of the plurality of parameters of each conveyor belt of the plurality of conveyor belts comprises at least an age, a belt sway measurement, a length, and a safe loading capacity of each conveyor belt of the plurality of conveyor belts. The one or more processing units is further configured to train a multi-linear regression model to predict a safe loading capacity of one or more conveyor belt based on other parameters of the one or more conveyor belts, such as a length and age of the one or more conveyor belts. The plurality of parameters associated with each conveyor belt of the plurality of conveyor belts further comprises a belt width and an idler troughing angle associated with each conveyor belt of the plurality of conveyor belts. The multi-linear regression is configured to analyze the plurality of parameters associated with a specific conveyor belt and to predict a safe loading capacity of the specific conveyor belt based on the analysis.

In the preferred embodiment, the method further comprises receiving, by the one or more processing units, from the database, a set of parameters associated with the conveyor belt. The set of parameters comprises a belt length, a belt age, a troughing angle of one or more idlers of the conveyor belt, and a width of the belt. The one or more processing units is further configured to analyze the belt sway measurement and the set of parameters by application of the multi-linear regression algorithm on the set of parameters and the belt sway measurement of the conveyor belt. The one or more processing units is further configured to determine a safe loading capacity of the conveyor belt based on the analysis of the conveyor belt.

In the preferred embodiment, the method further comprises receiving, by the one or more processing units, from the database, a density of a material transported by the conveyor belt. The one or more processing units is further configured to determine a quantity of the material which weighs lesser than or equal to the safe loading capacity of the conveyor belt. The one or more processing units is further configured to control a feeder to determine the determined quantity of the material on the conveyor belt. Thus advantageously, the one or more processing units automatically assign the material on the conveyor belt based on the belt sway measurement and the safe loading capacity of the conveyor belt. Since the safe loading capacity of the conveyor belt is continuosly monitored, a user is enabled to perform predictive maintenance on the conveyor belt.

In the preferred embodiment, the method further comprises determining, by the one or more processing units, a spillage of the material from at least one side of the conveyor belt to a factory floor based on an analysis of the at least one image. The one or more processing units is further configured to generate the control signal based on the determined spillage of the material. The one or more processing units is further configured to transmit the control signal to the one or more actuators to adjust the shape of the conveyor belt based on the determination of the spillage of the material from the conveyor belt. Advantageously, an occurrence of material spillage from the conveyor belt is automatically corrected based on the determination of the material spillage from the conveyor belt.

The object of the present invention is also achieved by an industrial control system for adjusting a conveyor belt based on a belt sway of the conveyor belt. The industrial control system comprises a processing unit and a memory coupled to the processing unit. The memory comprises a belt adjustment module stored in the form of machine-readable instructions executable by the processor. The belt adjustment module is configured for performing the method as described above.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of system for adjusting a conveyor belt based on a belt sway of the conveyor belt, according to an embodiment of the present invention;
- FIG 2: is a block diagram of an industrial control system, such as those shown in FIG. 1, in which an embodiment of the present invention can be implemented;
- FIG 3: is a block diagram of a belt adjustment module, such as those shown in FIG 2, in which an embodiment of the present invention can be implemented;
- FIGS 4A-D: is a process flowchart illustrating an exemplary method of recalibrating a plurality of sensors in a technical installation, according to an embodiment of the present invention;
- FIGS 5: is a block diagram illustrating an exemplary method of training a multilinear regression algorithm, according to an embodiment of the present invention; and
- FIGS 6: is an exemplary illustration of adjusting a conveyor belt based on a belt sway measurement, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

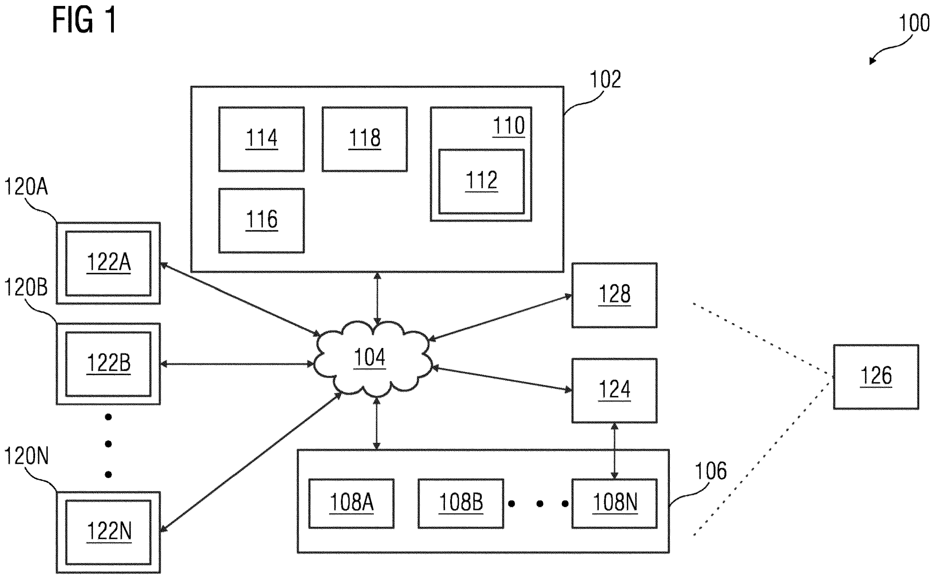

FIG 1 is a block diagram of system for adjusting a conveyor belt 106 based on a belt sway of the conveyor belt, according to an embodiment of the present invention. In FIG 1, the system 100 includes an industrial control system 102, a technical installation 106 and a plurality of human machine interfaces 120A-N. The system is implemented in an industrial environment. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The industrial control system 102 is communicatively connected to a technical installation via a network connection 104 (such as Local Area Network (LAN), Wide Area Network (WAN), Wi-Fi, Internet, any short range or wide range communication). The industrial control system 102 is also connected to the plurality of human machine interfaces 120A-N via the network connection 104.

The industrial control system 102 is communicatively coupled to a plurality of idlers 108AN of the conveyor belt 106 via the network connection 104. The plurality of idlers 108A-N includes but is not limited to troughing idlers, impact idlers, return idlers, guide idlers, self aligning idlers, and tension idlers.

The plurality of human machine interfaces 120A-N may be a desktop computer, laptop computer, tablet, smart phone and the like. Each of the plurality of human machine interfaces 120A-N is provided with a user interface 122A-N for controlling the conveyor belt 106 and a feeder of the conveyor belt 106. The plurality of human machine interfaces 120A-N can access the industrial control system 102 to adjust the conveyor belt 106. For example, each of the plurality of human machine interfaces 120A-N enables a user to transmit one or more control signals to each of the plurality of idlers 108A-N to adjust the conveyor belt 106.

The plurality of human machine interfaces 120A-N can access cloud applications (such as providing performance visualization of the technical installation via a web browser). Throughout the specification, the terms "human machine interface", "client device" and "user device" are used interchangeably. One or more of the plurality of human machine interfaces 120A-N are further configured to receive a plurality of user actions from a plurality of users. The plurality of user actions comprises user inputs, user commands, user gestures, programming instructions, and user passwords. The plurality of user actions are entered by the plurality of users to perform one or more tasks on the plurality of idlers 108A-N.

It is noted that the industrial control system 102 further comprises one or more actuators 124 which is communicatively coupled to the plurality of idlers 108A-N. The one or more actuators 124 is configured to exert force on the plurality of idlers 108A-N to adjust a shape of the conveyor belt 106. A user uses the plurality of human machine interfaces 120A-N to actuate the one or more actuators 124 to exert force on the plurality of idlers 108A-N. In one example, the one or more actuators 124 comprise pneumatic actuators, hydraulic actuators, electric actuators, and mechanical actuators.

The system further comprises a proportional integral derivative (PID) controller 128 configured to generate a control signal to cause the plurality of idlers 108A-N to counteract one or more effects of belt sway in the conveyor belt 106. Examples of the PID controller 128 comprises but is not limited to an on-off PID controller, a Proportional controller, and a standard PID controller.

The system 100 further comprises an image capture device 126 which is configured to capture at least one image of the conveyor belt 106. Examples of the image capture device comprises but is not limited to industrial cameras, line-scan cameras, infrared cameras, time-of-flight cameras, stereo cameras, mobile phone cameras and machine vision integrated cameras.

The industrial control system 102 may be a standalone server deployed at a control station or may be a remote server on a cloud computing platform. In a preferred embodiment, the industrial control system 102 may be a cloud-based industrial control system. The industrial control system 102 is capable of delivering applications (such as cloud applications) for recalibrating the plurality of sensors 108A-N in the technical installation 106. The industrial control system 102 may comprise a digitalization platform 110 (such as a cloud computing platform), a belt adjustment module 112, a server 114 including hardware resources and an operating system (OS), a network interface 116 and a database 118. The network interface 116 enables communication between the industrial control system 102, the technical installation 106, the plurality of human machine interfaces 120A-N, the plurality of sensors 108A-N. The interface, for example, a cloud interface (not shown in FIG 1) may allow the engineers at the technical installation to access the plurality of idlers 108A-N and adjust the shape of the conveyor belt 106.

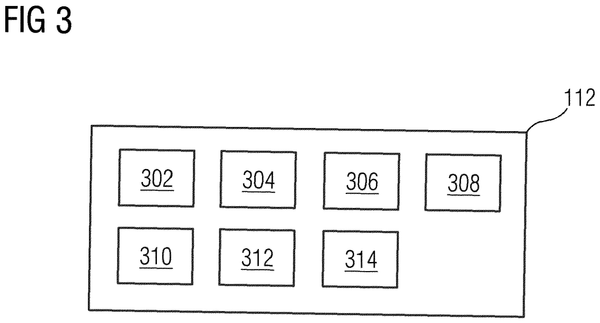

The server 114 includes one or more servers on which the OS is installed. The server 114 may comprise one or more processors, one or more storage devices, such as, memory units, for storing data and machine-readable instructions for example, applications and application programming interfaces (APIs), and other peripherals required for providing computing (such as cloud computing) functionality. In one example, the digitalization platform 110 may be implemented in the server 114. The digitalization platform 110 enables functionalities such as data reception, data processing, data rendering, data communication, etc. using the hardware resources and the OS of the server 114 and delivers the aforementioned services using the application programming interfaces deployed therein. The digitalization platform 110 comprises a combination of dedicated hardware and software built on top of the hardware and the OS. Details of the belt adjustment module 112 is explained in FIG. 3.

The database 118 stores a plurality of parameters of a plurality of conveyor belts such a length, age, width, belt sway, safe loading capacity, a material of manufacture, and a pay-load of the plurality of conveyor belts. The database 118 further comprises a data model which establishes a interrelationship between the belt sway measurement of the conveyor belt and the safe loading capacity of the conveyor belt. The database 118 further comprises a plurality of PID tuning configurations associated with implementing a control loop to reduce belt sway in the conveyor belt 106. The database 118, according to another embodiment of the present invention, is a location on a file system directly accessible by the belt adjustment module 112.

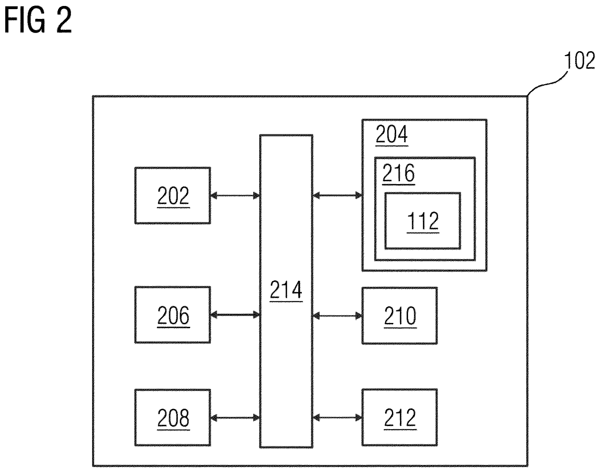

FIG 2 is a block diagram of an industrial control system 102, such as those shown in FIG 1, in which an embodiment of the present invention can be implemented. In FIG 2, the industrial control system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the belt adjustment module 112 stored in the form of machine-readable instructions on any of the above-mentioned storage media and may be in communication with and executed by the one or more processing units 202.

When executed by the one or more processing units 202, the belt adjustment module 112 causes the image capture device 126 to capture at least one image of the conveyor belt 106.

The belt adjustment module 112 further causes the one or more processing units to receive the at least one image from the image capture device 126. The belt adjustment module 112 further causes the one or more processing units 202 to apply an edge detection algorithm on the at least one image. Examples of the edge detection algorithm includes, but is not limited to a sobel operator algorithm, a canny edge detector algorithm, a robert cross operator algorithm, a prewitt operator algorithm, a zero crossing algorithm, and a kirsch compass mask algorithm. The edge detection algorithm is configured to identify the conveyor belt 106 in the at least one image and to further identify a plurality of contour lines of the conveyor belt in the at least one image. The edge detection algorithm is further configured to generate an edge map based on the detected plurality of contour lines. The edge map is a binary image comprising the plurality of contour lines of the conveyor belt 106.

The belt adjustment module 112 further causes the one or more processing units 202 to extract the plurality of contour lines of the conveyor belt 106 from the at least one image by application of the edge detection algorithm on the at least one image of the conveyor belt 106. The belt adjustment module 112 further causes the one or more processing units to apply a morphological operation on the edge map to determine an image skeleton, which is a thinned representation of a central line of the conveyor belt 106. Examples of the morphological operation incldues an erosion operaion, a dilation operation, and a subtraction operation. The one or more processing units 202 is further configured to determine a plurality of skeleton pixels from the determined image skeleton by application of one or more image filters such as a low pass filter and a high pass filter. The one or more processing units 202 is further configured to connect the plurality of skeleton pixels to determine the central line for the conveyor belt 106. In other words, the belt adjustment module 112 further causes the one or more processing units 202 to determine a center line of the conveyor belt 106 based on an analysis of the plurality of contour lines of the at least one image.

The belt adjustment module 112 further causes the one or more processing units 202 to compare the determined center line of the conveyor belt 106 with one or more reference points in the at least one image. The one or more reference points are indicative of one or more reference pixels in the at least one image. In one example, the one or more processing units 202 is configured to determine a euclidean distance between at least one pixel in the determined center line and the one or more reference pixels to compare the determined center line of the conveyor belt 106 with one or more reference points. In one example, the determined euclidean distance is indicative of a a displacement of the center line of the conveyor belt 106 in comparison with the one or more reference points in the at least one image.

The belt adjustment module 112 further causes the one or more processing units 202 to determine the belt sway measurement of the conveyor belt 106 based on the determined euclidean distance. Advantageously, the belt sway measurement of the conveyor belt 106 is automatically determined by the one or more processing units 202 without manual intervention. Furthermore, use of the edge detection algorithm to measure the belt sway measurement has added advantages such as increased accuracy, high speed data collection, consistency, reduced cost, and early detection.

The belt adjustment module 112 further causes the one or more processing unit 202 to receive a plurality of PID tuning configurations from the database 118. The plurality of PID tuning configurations comprises a proportional gain configuration, an integral gain configuration and a derivative gain configuration for the PID controller. In one example, the plurality of PID tuning configurations are received from a user. In another example, the plurality of PID tuning configurations are generated by application of one or more tuning methods like Ziegler-Nichols tuning method or the Tyreus-Luyben tuning method on one or more data models of the conveyor belt. In one example, the one or more data models are mathematical relationships between a belt sway of the conveyor belt and a shape of the conveyor belt. The plurality of PID tuning configurations are indicative of a proportional, integral and derievative relationship between a belt sway of the conveyor belt 106 and one or more control signals which are to be applied to the one or more actuators 124 to readjust the conveyor belt 106 to counteract the belt sway on the conveyor belt 106.

The belt adjustment module 112 further causes the one or more processing units 202 to tune the PID controller 128 based on the plurality of PID tuning configurations. The one or more processing units is further configured to transmit the determined belt sway measurement to the PID controller 128 to generate the control signal based on the determined belt sway measurement. The belt adjustment module 112 further causes the one or more processing units 202 to control the PID controller 128 to generate the control signal based on the determined belt sway measurement. The belt adjustment module 112 further causes the one or more processing units 202 to transmit the control signal to the one or more actuators 124 of the conveyor belt 106 to adjust the shape of the conveyor belt 106 based on the determined belt sway of the conveyor belt 106. In one example, the one or more actuators 124 are communicatively coupled to one or more drive pulleys of the conveyor belt 106. In such a case, the one or more actuators are configured to cause the drive pulleys to adjust a tension of the conveyor belt 106 and thereby adjust the shape of the conveyor belt 106.

Advantageously, the PID controller 128 is used to continuously monitor and readjust the shape of the conveyor belt 106 based on the belt sway measurement of the conveyor belt 106. Since the shape of the conveyor belt is adjusted automatically based on the determined belt sway, the conveyor belt is protected from any wear, tear and damage which occur due to belt sway in the conveyor belt.

The belt adjustment module 112 further causes the one or more processing units 202 to receive from the database 118, a plurality of parameters associated with a plurality of conveyor belts. Examples of the plurality of parameters of each conveyor belt of the plurality of conveyor belts comprises at least an age, a belt sway measurement, a length, and a safe loading capacity of each conveyor belt of the plurality of conveyor belts. The belt adjustment module 112 further causes the one or more processing units 202 to train a multi-linear regression model to predict a safe loading capacity of one or more conveyor belt based on other parameters of the one or more conveyor belts, such as a length and age of the one or more conveyor belts. The plurality of parameters associated with each conveyor belt of the plurality of conveyor belts further comprises a belt width and an idler troughing angle associated with each conveyor belt of the plurality of conveyor belts. The multi-linear regression is configured to analyze the plurality of parameters associated with a specific conveyor belt and to predict a safe loading capacity of the specific conveyor belt based on the analysis.

The belt adjustment module 112 further causes the one or more processing units 202 to receive from the database 118, a set of parameters associated with the conveyor belt. The set of parameters comprises a belt length, a belt age, a troughing angle of one or more idlers of the conveyor belt, and a width of the belt. The belt adjustment module 112 further causes the one or more processing units 202 to analyze the belt sway measurement and the set of parameters by application of the multi-linear regression algorithm on the set of parameters and the belt sway measurement of the conveyor belt 106. The belt adjustment module 112 further causes the one or more processing units 202 to determine a safe loading capacity of the conveyor belt 106 based on the analysis of the conveyor belt 106.

The belt adjustment module 112 further causes the one or more processing units 202 to receive, from the database, a density of a material transported by the conveyor belt 106. The belt adjustment module 112 further causes the one or more processing units 202 to determine a quantity of the material which weighs lesser than or equal to the safe loading capacity of the conveyor belt 106. The belt adjustment module 112 further causes the one or more processing units 202 to control a feeder to determine the determined quantity of the material on the conveyor belt 106. Thus advantageously, the one or more processing units 202 automatically assign the material on the conveyor belt 106 based on the belt sway measurement and the safe loading capacity of the conveyor belt 106. Since the safe loading capacity of the conveyor belt 106 is continuosly monitored, a user is enabled to perform predictive maintenance on the conveyor belt 106.

The belt adjustment module 112 further causes the one or more processing units 202 to determine a spillage of the material from at least one side of the conveyor belt 106 to a factory floor based on an analysis of the at least one image. The belt adjustment module 112 further causes the one or more processing units to generate the control signal based on the determined spillage of the material. The belt adjustment module 112 further causes the one or more processing units 202 to transmit the control signal to the one or more actuators to adjust the shape of the conveyor belt 106 based on the determination of the spillage of the material from the conveyor belt 106. Advantageously, an occurrence of material spillage from the conveyor belt 106 is automatically corrected based on the determination of the material spillage from the conveyor belt.

The communication interface 208 is configured for establishing communication sessions between the plurality of human machine interfaces 120A-N, and the industrial control system 102. The communication interface 208 allows the one or more engineering applications running on the plurality of human machine interfaces 120A-N to import/export engineering programs into the processing unit 202. In an embodiment, the communication interface 208 interacts with the interface at the plurality of human machine interfaces 120A-N for allowing the engineers to access the engineering programs associated with an engineering project file and perform one or more actions on the engineering programs stored in the industrial control system 102.

The input-output unit 210 include input devices a keypad, touch-sensitive display, camera (such as a camera receiving gesture-based inputs), etc. capable of receiving one or more input signals, such as user commands to process engineering project file. Also, the input-output unit 210 is a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processing unit 202, the memory 204, and the input-output unit 210.

The network interface 212 may be configured to handle network connectivity, bandwidth and network traffic between the industrial control system 102, plurality of human machine interfaces 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an industrial control system 102 as is unique to the present disclosure or necessary for an understanding of the present disclosure is depicted and described. The remainder of the construction and operation of the industrial control system 102 may conform to any of the various current implementation and practices known in the art.

FIG 3 is a block diagram of the belt adjustment module 112, such as those shown in FIG 2, in which an embodiment of the present invention can be implemented. In FIG 3, the belt adjustment module 112 comprises a request handler module 302, a belt sway detection module 304, an analysis module 306, a modifier module 308, an engineering object database 310, a spillage detection module 312 and a deployment module 314. FIG. 3 is explained in conjunction with FIG. 1 and FIG. 2.

The request handler module 302 is configured for receiving a request from a user to adjust the conveyor belt 106 based on the belt sway measurement. For example, the request is received from one of the one or more users external to the system 100 via a network. In alternative embodiment, the request is received from the one or the plurality of human machine interfaces 120A-N via the network 104.

The belt sway detection module 304 is configured for determining the belt sway measurement in the conveyor belt 106 based on an analysis of the at least one image. The belt sway is determined by application of the edge detection algorithm on the at least one image.

The analysis module 306 is configured for analyzing the at least one image captured by the image capture device 126.

The modifier module 308 is configured to generate and transmit a control signal to the one or more actuators 124 to cause the plurality of idlers 108A-N to adjust the shape of the conveyor belt 106. The modifier module 308 is configured to transmit the determined belt sway measurement to the PID controller to generate the control signal for adjusting the shape of the conveyor belt 106.

The engineering object database 310 is configured for generating an engineering object library comprising the plurality of parameters associated with the plurality of conveyor belts. In one example, the engineering object database 310 is a SQL or a non-SQL database.

The spillage detection module 312 is configured to detection of material spillage from a side of the conveyor belt by application of an object detection algorithm on the at least one image captured by the image capture device 126.

The deployment module 314 is configured for applying the generated control signal to the one or more actuators 124 to adjust shape of the conveyor belt 106.

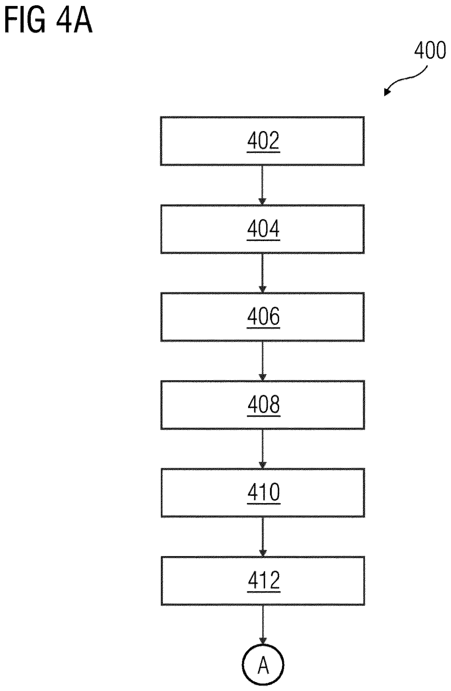

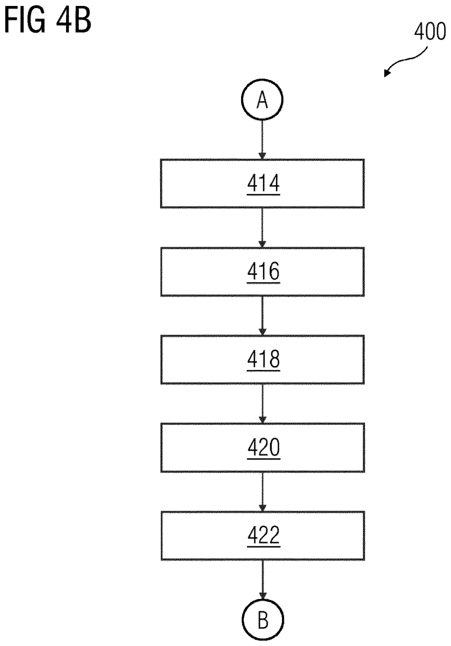

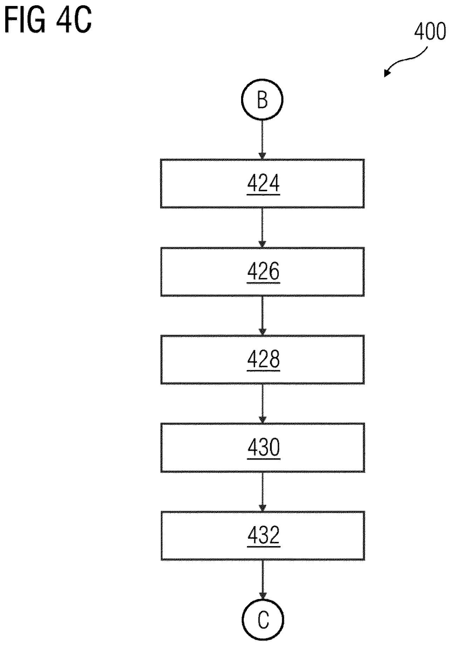

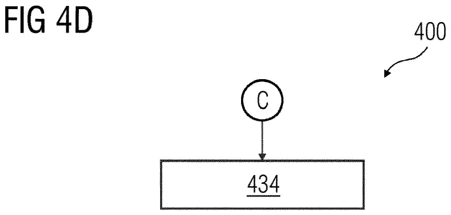

FIGS 4A-D is a process flowchart illustrating an exemplary method of adjusting a conveyor belt, according to an embodiment of the present invention. FIG. 4A-D is explained in conjunction with FIGs 1 to 3.

At step 402, at least one image of the conveyor belt 106 is received by the one or more processing units 202. The at least one image is received from an image capture device 126. Examples of the image capture device 126 comprises but is not limited to industrial cameras, line-scan cameras, infrared cameras, stereo cameras, mobile phone cameras and machine vision integrated cameras.

At step 404, an edge detection algorithm ia applied on the at least one image by the one or more processing units 202. Examples of the edge detection algorithm includes, but is not limited to a sobel operator algorithm, a canny edge detector algorithm, a robert cross operator algorithm, a prewitt operator algorithm, a zero crossing algorithm, and a kirsch compass mask algorithm. The edge detection algorithm is configured to identify the conveyor belt 106 in the at least one image and to further identify a plurality of contour lines of the conveyor belt 106 in the at least one image. The edge detection algorithm is further configured to generate an edge map based on the detected plurality of contour lines. The edge map is a binary image comprising the plurality of contour lines of the conveyor belt 106.

At step 406, the plurality of contour lines of the conveyor belt 106 are extracted by the one or more processing units 202 from the at least one image by application of the edge detection algorithm on the at least one image of the conveyor belt 106. The one or more processing units 202 are further configured to apply a morphological operation on the edge map to determine an image skeleton, which is a thinned representation of a central line of the conveyor belt 106. Examples of the morphological operation incldues an erosion operaion, a dilation operation, and a subtraction operation. The one or more processing units 202 is further configured to determine a plurality of skeleton pixels from the determined image skeleton by application of one or more image filters such as a low pass filter and a high pass filter. The one or more processing units 202 is further configured to connect the plurality of skeleton pixels to determine the central line for the conveyor belt 106. In other words, the one or more processing unit 202 is further configured to determine a center line of the conveyor belt 106 based on an analysis of the plurality of contour lines of the at least one image.

At step 408, the determined center line of the conveyor belt 106 is compared by the one or more processing units 202 with one or more reference points in the at least one image. The one or more reference points are indicative of one or more reference pixels in the at least one image. In one example, the one or more processing unit 202 is configured to determine a euclidean distance between at least one pixel in the determined center line and the one or more reference pixels to compare the determined center line of the conveyor belt 202 with one or more reference points. In one example, the determined euclidean distance is indicative of a a displacement of the center line of the conveyor belt 106 in comparison with the one or more reference points in the at least one image.

At step 410, the belt sway measurement of the conveyor belt 106 is determined by the one or more processing units 202 based on the determined euclidean distance. Advantageously, the belt sway measurement of the conveyor belt 106 is automatically determined by the one or more processing units 202 without manual intervention. Furthermore, use of the edge detection algorithm to measure the belt sway measurement has added afvantages such as increased accuracy, high speed data collection, consistency, reduced cost, and early detection.

At step 412, a plurality of PID tuning configurations are received by the one or more processing units 202 from the database 118. The plurality of PID tuning configurations comprises a proportional gain configuration, an integral gain configuration and a derivative gain configuration for the PID controller 128. In one example, the plurality of PID tuning configurations are received from a user. In another example, the plurality of PID tuning configurations are generated by application of one or more tuning methods like Ziegler-Nichols tuning method or the Tyreus-Luyben tuning method on one or more data models of the conveyor belt 106. In one example, the one or more data models are mathematical relationships between a belt sway of the conveyor belt 106 and a shape of the conveyor belt 106. The plurality of PID tuning configurations are indicative of a proportional, integral and derievative relationship between a belt sway of the conveyor belt 106 and one or more control signals which are to be applied to the one or more actuators 124 readjust the conveyor belt 106 to counteract the belt sway on the conveyor belt 106.

At step 414, the PID controller is tuned by the one or more processing units 202 based on the plurality of PID tuning configurations. The one or more processing units 202 is further configured to transmit the determined belt sway measurement to the PID controller 128 to generate the control signal based on the determined belt sway measurement. In other words, the one or more processing units 202 is configured to control the PID controller 128 to generate the control signal based on the determined belt sway measurement. The one or more processing units 202 is further configured to transmit the control signal to the one or more actuators 124 of the conveyor belt to adjust the shape of the conveyor belt 106 based on the determined belt sway of the conveyor belt 106. In one example, the one or more actuators 124 are communicatively coupled to one or more drive pulleys of the conveyor belt. In such a case, the one or more actuators 124 are configured to cause the drive pulleys to increase a tension of the conveyor belt 106 and thereby adjust the shape of the conveyor belt 106.

Advantageously, the PID controller 128 is used to continuously monitor and readjust the shape of the conveyor belt 106 based on the belt sway measurement of the conveyor belt 106. Since the shape of the conveyor belt 106 is adjusted automatically based on the determined belt sway, the conveyor belt 106 is protected from any wear, tear and damage which occur due to belt sway in the conveyor belt 106.

At step 416, from a database, a plurality of parameters associated with a plurality of conveyor belts are received by the one or more processing units 202. Examples of the plurality of parameters of each conveyor belt of the plurality of conveyor belts comprises at least an age, a belt sway measurement, a length, and a safe loading capacity of each conveyor belt of the plurality of conveyor belts.

At step 418, a multi-linear regression model is trained by the one or more processing units 202 to predict a safe loading capacity of one or more conveyor belt based on other parameters of the one or more conveyor belts, such as a length and age of the one or more conveyor belts. The plurality of parameters associated with each conveyor belt of the plurality of conveyor belts further comprises a belt width and an idler troughing angle associated with each conveyor belt of the plurality of conveyor belts. The multi-linear regression is configured to analyze the plurality of parameters associated with a specific conveyor belt and to predict a safe loading capacity of the specific conveyor belt based on the analysis.

At step 420, from the database, a set of parameters associated with the conveyor belt 106 are received by the one or more processing units 202. The set of parameters comprises a belt length, a belt age, a troughing angle of one or more idlers of the conveyor belt, and a width of the conveyor belt 106. The one or more processing units 202 is further configured to analyze the belt sway measurement and the set of parameters by application of the multi-linear regression algorithm on the set of parameters and the belt sway measurement of the conveyor belt 106. At step 422, a safe loading capacity of the conveyor belt 106 is predicted by the one or more processing units 202 based on the analysis of the conveyor belt 106.

At step 424, from the database 118, a density of a material transported by the conveyor belt 106 is received by the one or more processing units 202. At step 426, a quantity of the material which weighs lesser than or equal to the safe loading capacity of the conveyor belt 106 is determined by the one or more processing units 202. The quantity is determined by dividing the safe loading capacity of the conveyor belt with the density of the material. At step 428, a feeder is controlled by the one or more processing units 202 to determine the determined quantity of the material on the conveyor belt 106. Thus advantageously, the one or more processing units 202 automatically assign the material on the conveyor belt based on the belt sway measurement and the safe loading capacity of the conveyor belt 106. Since the safe loading capacity of the conveyor belt 106 is continuously monitored, a user is enabled to perform predictive maintenance on the conveyor belt 106.

At step 430, a spillage of the material from at least one side of the conveyor belt 106 to a factory floor is determined by the one or more processing units 202 based on an analysis of the at least one image. In one example, the spillage is determined by application of an object recognition algorithm on the at least one image. Examples of the object recognition algorithm comprises, but is not limited to an image segmentation algorithm, a convolutional neural network based algorithm, and a template matching algorithm. At step 432, the control signal is generated by the one or more processing units 202 based on the determined spillage of the material. At step 434, the control signal is transmitted to the one or more actuators 124 to adjust the shape of the conveyor belt 106 based on the determination of the spillage of the material from the conveyor belt 106. Advantageously, an occurrence of material spillage from the conveyor belt 106 is automatically corrected based on the determination of the material spillage from the conveyor belt.

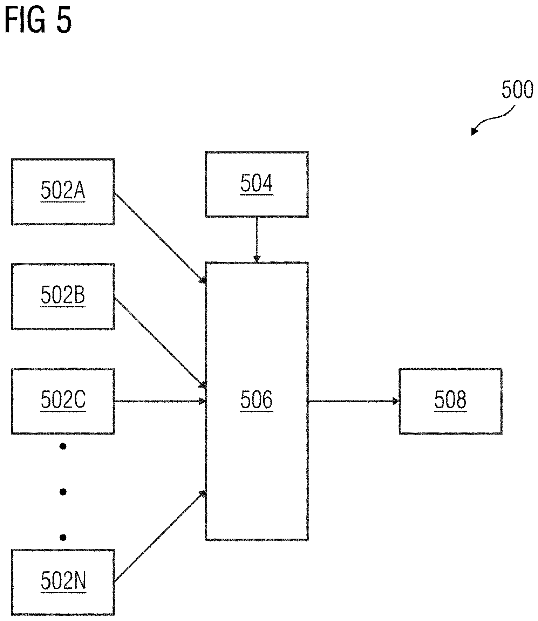

FIGS 5 is a block diagram illustrating an exemplary method of training a multi-linear regression algorithm 500, according to an embodiment of the present invention. The multi-linear regression algorithm 500 is configured to an analyze a set of parameters 502 such as a belt sway, a belt age, a belt length, a belt length, a belt width, and an idler troughing angle. The multi-linear regression algorithm 500 is trained using a training data set comprising the plurality of parameters associated with a plurality of conveyor belts. The multi-linear regression algorithm 500 is configured to predict the safe loading capacity of the conveyor belt 106.

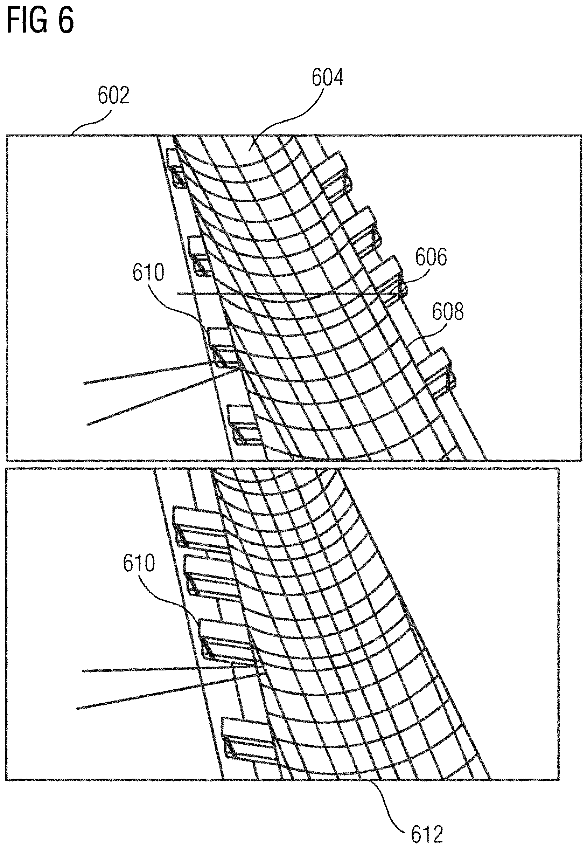

FIGS 6is an exemplary illustration of adjusting a conveyor belt 106 based on a belt sway measurement, according to an embodiment of the present invention. FIG. 6 comprises a first image 602 and a second image 612. The first image 602 and the second image 612 are captured by the image capture device 126. The first image 602 further depicts the plurality of contour lines 604. Furthermore, the first image 602 depicts the central lines 606 of the conveyor belt. The first image 602 further depicts the one or more reference points 608. The first image 602 and the second image 612 further depicts an idler of the plurality of idlers 108A_N

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference list

a conveyor belt 106
The industrial environment 100
an industrial control system 102
a technical installation 106
a plurality of human machine interfaces 120A-N
The industrial control system 102
a network connection 104
a plurality of idlers 108A-N
an engineering tool 122A-N
the PID controller 128
a digitalization platform 110
a belt adjustment module 112
a server 114
a network interface 116
a database 118
a processing unit 202
an accessible memory 204
a storage unit 206
a communication interface 208
an input-output unit 210
a network interface 212
a bus 214
an integrated development environment (IDE) 216
the image capture device 126
one or more actuators 124
a request handler module 302,
a belt sway detection module 304,
an analysis module 306,
a modifier module 308,
an engineering object database 310,
a spillage detection module 312
a deployment module 314

## Claims

1. A system for adjusting a conveyor belt based on a belt sway of the conveyor belt, the system comprising:
an image capture device configured to capture at least one image of a conveyor belt;
one or more actuators communicatively coupled with the conveyor belt, wherein the one or more actuators are configured to adjust a shape of the conveyor belt;
one or more processing units configured to:
determine a belt sway measurement of the conveyor belt based on an analysis of the at least one image;
generate a control signal based on the determined belt sway measurement; and
transmit the control signal to the one or more actuators to adjust a shape of the conveyor belt based on the determined belt sway of the conveyor belt.

2. The system according to claim 1, wherein the one or more processing units is configured to:
extract a plurality of contour lines of the conveyor belt from the at least one image by application of an edge detection algorithm on the at least one image of the conveyor belt;
determine a center line of the conveyor belt based on an analysis of the plurality of contour lines of the at least one image;
compare the determined center line of the conveyor belt with one or more reference points within the at least one image; and
determine the belt sway measurement of the conveyor belt based on the comparison, wherein the belt sway measurement is determined based on a displacement of the center line of the conveyor belt in comparison with the one or more reference points in the at least one image.

3. The system according to claims 1 or 2, wherein the one or more processing units is further configured to:
receive a plurality of Proportional integration derivative (PID) tuning configurations;
tune a PID controller based on the received plurality of PID tuning configurations such that:
the PID controller is tuned to generate the control signal based on a proportional, an integral and a derivative relationship with at least one belt sway measurement of the conveyor belt, and
the control signal is generated to actuate the one or more actuators which are configured to adjust the shape of the conveyor belt; and
control the PID controller to generate the control signal based on the determined belt sway measurement associated with the conveyor belt.

4. The system according to claim 1, 2, or 3, wherein the one or more processing units is further configured to:
receive from a database, a plurality of parameters associated with a plurality of conveyor belts, wherein the plurality of parameters associated with each conveyor belt of the plurality of conveyor belts comprises at least an age, a belt sway measurement, a length, and a safe loading capacity of each conveyor belt of the plurality of conveyor belts; and
train a multi-linear regression algorithm based on a training dataset comprising the received plurality of parameters such that the multi-linear regression algorithm is configured to predict a safe loading capacity for each conveyor belt based on other parameters of the plurality of parameters associated with each of the plurality of conveyor belts.

5. The system according to claims 1, 2, 3 or 4, wherein the one or more processing units is further configured to:
determine a safe loading capacity of the conveyor belt by application of the trained multi-linear regression algorithm on the determined belt sway measurement of the conveyor belt;
receive from the database a density of a material which is transported by the conveyor belt;
determine a quantity of the material which weighs lesser than or equal to the safe loading capacity of the conveyor belt based on the density of the material; and
control a feeder to deposit the determined quantity of the material on the conveyor belt.

6. The system according to claim 5, wherein the one or more processing units is further configured to:
determine a spillage of the material from at least one side of the conveyor belt to a factory floor based on an analysis of the at least one image;
regenerate the control signal based on the determined spillage of the material; and
transmit the control signal to the one or more actuators to adjust the shape of the conveyor belt based on the determination of the spillage of the material from the conveyor belt.

7. A method of adjusting a conveyor belt based on a belt sway of the conveyor belt, the method comprising:
receiving from an image capture device, by one or more processing units, at least one image of a conveyor belt;
determining, by the one or more processing units, a belt sway measurement of the conveyor belt based on an analysis of the at least one image;
generating, by the one or more processing units, a control signal based on the determined belt sway measurement and a Proportional integration derivative (PID) controller; and
transmitting, by the one or more processing units, the control signal to one or more actuators communicatively coupled with the conveyor belt to adjust a shape of the conveyor belt based on the determined belt sway of the conveyor belt.

8. The method according to claim 7, wherein determining, by the one or more processing units, the belt sway measurement of the conveyor belt based on an analysis of the at least one image of the conveyor belt comprises:
extracting, by the one or more processing units, a plurality of contour lines of the conveyor belt from the edge map by application of an edge detection algorithm on the at least one image of the conveyor belt;
determining, by the one or more processing units, a center line of the conveyor belt based on an analysis of the plurality of contour lines of the at least one image;
comparing, by the one or more processing units, the determined center line of the conveyor belt with one or more reference points within the at least one image; and
determining, by the one or more processing units, the belt sway measurement of the conveyor belt based on the comparison, wherein the belt sway measurement is determined based on a displacement of the center line of the conveyor belt in comparison with the one or more reference points in the at least one image.

9. The method according to claim 8, wherein generating the control signal based on the determined belt sway measurement and the PID controller comprises:
receiving, by the one or more processing units (202), a plurality of PID tuning configurations from a user;
tuning, by the one or more processing units (202), the PID controller based on the received plurality of PID tuning configurations such that:
the PID controller is tuned to generate the control signal based on a proportional, an integral and a derivative relationship with at least one belt sway measurement of the conveyor belt, and
the control signal is generated to actuate the one or more actuators which are configured to adjust the shape of the conveyor belt; and
controlling, by the one or more processing units, the PID controller to generate the control signal based on the determined belt sway measurement associated with the conveyor belt.

10. The method according to claim 7, 8, or 9, further comprising:
receiving from a database, by the one or more processing units, a plurality of parameters associated with a plurality of conveyor belts, wherein the plurality of parameters associated with each conveyor belt of the plurality of conveyor belts comprises at least an age, a belt sway measurement, a length, and a safe loading capacity of each conveyor belt of the plurality of conveyor belts; and
training, by the one or more processing units, a multi-linear regression algorithm based on a training dataset comprising the received plurality of parameters such that the multi-linear regression algorithm is configured to predict a safe loading capacity for each conveyor belt based on other parameters of the plurality of parameters associated with each of the plurality of conveyor belts.

11. The method according to claims 7, 8, 9, or 10, further comprising:
determining, by the one or more processing units, a safe loading capacity of the conveyor belt by application of the trained multi-linear regression algorithm on the determined belt sway measurement of the conveyor belt;
receiving from the database, by the one or more processing units, a density of a material which is transported by the conveyor belt;
determining, by the one or more processing units, a quantity of the material which weighs lesser than or equal to the safe loading capacity of the conveyor belt based on the density of the material; and
controlling, by the one or more processing units, a feeder to deposit the determined quantity of the material on the conveyor belt.

12. The method according to claim 11, further comprising:
determining, by the one or more processing units, a spillage of the material from a side of the conveyor belt to a factory floor based on an analysis of the at least one image;
generating, by the one or more processing units, the control signal based on the determined spillage of the material; and
transmitting, by the one or more processing units, the control signal to the one or more actuators to adjust the shape of the conveyor belt based on the determination of the spillage of the material from the conveyor belt.

13. A computer-program product, having machine-readable instructions stored therein, that when executed by a processing unit (202), cause the processors to perform a method according to any of the claims 7-12.
